# EUROPÄISCHE PATENTSCHRIFT

(11) **EP 2 100 022 B1**
(45) Veröffentlichungstag und Bekanntmachung des Hinweises auf die Patenterteilung: **19.10.2011**
(21) Anmeldenummer: 07802711.7
(22) Anmeldetag: 20.08.2007
(51) Int. Cl.: F02G 5/02, F02B 39/10, F02D 29/06

(54) **AUFLADEEINRICHTUNG**
SUPERCHARGING DEVICE
DISPOSITIF DE SURALIMENTATION

(30) Priorität: 05.12.2006 DE 102006057247
(43) Veröffentlichungstag der Anmeldung: 16.09.2009
(73) Patentinhaber: Robert Bosch GmbH, 70442 Stuttgart (DE)
(72) Erfinder: SCHMITT, Manfred, 64646 Heppenheim (DE); RAUCHFUSS, Lutz, 71665 Vaihingen/enz (DE); BRZOZA, Miroslaw, 71701 Schwieberdingen (DE); URBAN, Sebastien, 67620 Soufflenheim (FR)
(86) Internationale Anmeldenummer: PCT/EP2007/058612
(87) Internationale Veröffentlichungsnummer: WO 2008/068060

(56) Entgegenhaltungen:
- WO-A-94/28298
- DE-A1- 10 221 157
- DE-A1-102005 040 887
- DE-C1- 19 939 289
- FR-A- 2 510 183
- GB-A- 1 539 166
- GB-A- 2 060 766

## Beschreibung

### Stand der Technik

Die Leistung einer Verbrennungskraftmaschine kann durch eine Steigerung der Luftmenge, die für den Verbrennungsprozess in den einzelnen Zylinder der Verbrennungskraftmaschine benötigt wird, erhöht werden. Eine Erhöhung der in die Zylinder der Verbrennungskraftmaschine eingebrachten Luftmenge lässt sich mit zwei verschiedenen Konzepten realisieren. Einerseits ist der Einsatz eines Abgasturboladers möglich, der zum Betrieb die im Abgas der Verbrennungskraftmaschine verbliebene Enthalpie nutzt; andererseits ist es möglich, einen Kompressor einzusetzen, der direkt durch die Kurbelwelle der Verbrennungskraftmaschine angetrieben wird.

Eine Aufladeeinrichtung für Verbrennungskraftmaschinen, die als Abgasturbolader beschaffen ist, umfasst mindestens ein Abgasturbinenteil. Dieser ist dem Abgasstrom der aufzuladenden Verbrennungskraftmaschine ausgesetzt und wird über diesen angetrieben. Der Turbinenteil des Abgasturboladers ist über eine Welle mit einem Verdichterteil verbunden, der seinerseits im Ansaugtrakt der Verbrennungskraftmaschine angeordnet ist. Der Turbinenteil wird vom Abgasstrom der Verbrennungskraftmaschine in Rotation versetzt und treibt somit den Verdichterteil an. Der Verdichterteil erhöht den Druck im Ansaugtrakt der Verbrennungskraftmaschine, so dass während des Ansaugtaktes der Verbrennungskraftmaschine eine größere Menge an für die Verbrennung erforderliche Luft in den Zylinder gelangt, verglichen mit der Luftmenge, die in die Zylinder eines Saugmotors gelangt. Damit steht bei einer derart aufgeladenen Verbrennungskraftmaschine mehr Sauerstoff zur Verbrennung einer entsprechend größeren Kraftstoffmenge pro Zylinder der Verbrennungskraftmaschine zur Verfügung. Dadurch steigt einerseits der Mitteldruck der Verbrennungskraftmaschine sowie sein Drehmoment, was eine Leistungssteigerung der Verbrennungskraftmaschine bedeutet.

Bei dem alternativen Konzept, d. h. dem Einsatz eines Kompressors, wird die zum Betrieb des einen Verdichter darstellenden Kompressors benötigte Energie als mechanische Energie von der Kurbelwelle der Verbrennungskraftmaschine geliefert. Während bei einer als Abgasturbolader ausgebildeten Aufladeeinrichtung die im Abgas enthaltene Enthalpie zur Leistungssteigerung der Verbrennungskraftmaschine genutzt wird, wird bei Kompressoreinsatz der Kompressor unmittelbar durch die Kurbelwelle der aufzuladenden Verbrennungskraftmaschine angetrieben. Dies bedeutet, dass die an den Kompressor abgegebene mechanische Energie nicht mehr als Antriebsleistung für den Antriebsstrang des Kraftfahrzeugs zur Verfügung steht.

Bei als Abgasturbolader beschaffenen Aufladeeinrichtungen wird der Abgasgegendruck im Abgasstrang durch den Turbinenteil der Aufladeeinrichtung erhöht. Die Erhöhung des Abgasgegendruckes verursacht erhebliche Motorleistungsverluste. Die in der Alternative, d. h. bei Kompressorbetrieb, von der Verbrennungskraftmaschine abgezweigte mechanische Energie verschlechtert den Wirkungsgrad des Verbrennungsmotors und damit die von diesem abgegebene effektive Leistung.

Aus Auto Motor und Sport, Band 10, Seite 26/2005 ist eine Veröffentlichung bekannt, "BMW-Vierzylinder nutzt Abwärme für Leistungssteigerung - Motor mit Turbine". Gemäß dieser Veröffentlichung wandelt eine Verbrennungskraftmaschine etwa zwei Drittel der im Kraftstoff enthaltenen Energie in Abwärme um, die entweder vom Kühlsystem der Verbrennungskraftmaschine aufgenommen oder durch den Abgastrakt der Verbrennungskraftmaschine abgeführt wird. Die bisher ungenutzte Abwärme kann bei Verbrennungskraftmaschinen zur Erhöhung des Wirkungsgrades um bis zu 15 % genutzt werden. Dazu wird ein 1,8 1-Vierzylinder mit einer zweistufig ausgelegten Dampfturbine gekoppelt, welche auf die Kurbelwelle des 1,8 1-Vierzylindermotors wirkt. Der Heißdampf wird durch Wärmetauscher erzeugt, die in der Nähe des Auspuffes im Abgasstrang der Verbrennungskraftmaschine untergebracht sind. Mittels eines Wasserkreislaufes kann aus dem Kühlkreislauf der Verbrennungskraftmaschine Kühlfluid abgezweigt werden. Durch den Antrieb der Kurbelwelle können entweder die Leistung und das Drehmoment gesteigert oder der spezifische Kraftverbrauch gesenkt werden.

Die GB 2 060 766 A offenbart eine Brennkraftmaschine mit einem Verdichter, der durch eine Dampfturbine angetrieben ist Die Dampfturbine treibt einen Kompressor mit Dampf an, der von einem abgasbeheizten Dampfgenerator geliefert wird.

Aus der DE 199 39 289 C1 ist ein Verfahren und eine Einrichtung zur Aufbereitung von Gasgemischen bekannt. Ein Abgasturbolader erhält seine Energlezufuhr aufgrund der Entspannung des Abgasmassenstroms. Dessen Leistungsvermögen ist steigerbar, wenn ihm aus den Abwärmepotentialen des Motors produzierter Wasserdampf zugeführt wird. Eine Begrenzung hierfür stellt der Dampfdruck dar, welcher nicht über dem Abgasdruck vor der Turbine liegen sollte, um den Gasaustritt des Motors nicht zu behindern. Deshalb wird vorgeschlagen, der Abgasturbine eine Dampfturbine vorzuschalten und den austretenden Dampf der Abgasturbine zuzuführen, um den Massenstrom zu steigern. Die Dampfturbine wird auf der verlängerten Welle des Turboladers angeordnet. Die dabei gewonnene zusätzliche Energie soll einerseits wie bisher dem Luftverdichter zugeführt werden, wobei der Überschussanteil an einen Generator abgeführt werden soll.

### Offenbarung, der Erfindung

Erfindungsgemäß wird vorgeschlagen, die in der Verbrennungskraftmaschine entstehenden Abgase durch einen in den Abgasstrang integrierten Abgaswärmetauscher zu leiten, welcher dem Antrieb eines Kompressors dient. Damit wird eine Aufladeeinrichtung für eine Verbrennungskraftmaschine geschaffen, die anstelle bei einem Abgasturbolader eingesetzten Turbinenteiles eine Dampfturbine enthält, mit welcher ein Verdichterrad einer Aufladeinrichtung zur Aufladung der Verbrennungskraftmaschine angetrieben werden kann. Der dazu erforderliche Dampf wird in dem Abgaswärmetauscher erzeugt, der im Abgastrakt, der Verbrennungskraftmaschine angeordnet ist. Da der Turbinenteil zum Beispiel eines Abgasturboladers entfällt, verringert sich dementsprechend der Abgasgegendruck. Ferner lässt sich durch die erfindungsgemäß vorgeschlagene Lösung unter Einsatz mindestens eines Dampfturbinenteiles eine Verbrauchsreduzierung erzielen, da aufgrund des reduzierten Abgasgegendruckes sich die für den Gaswechsel erforderliche, zu leistende Arbeit der Verbrennungskraftmaschine reduziert. Des Weiteren lässt sich in vorteilhafter Weise durch die erfindungsgemäß vorgeschlagene Lösung ein spontaneres Ansprechen der Verbrennungskraftmaschinen erreichen, das bisher bei mit als Abgasturbolader ausgebildeten Aufladeeinrichtungen einhergehende "Turboloch" entfällt. Des Weiteren kann durch die erfindungsgemäß vorgeschlagene Lösung erreicht werden, dass kleinere Generatoren zur Stromerzeugung am Kraftfahrzeug eingesetzt werden können oder diese im idealfall vollständig entfallen können.

Der erfindungsgemäß vorgeschlagenen Lösung folgend wird der Dampf in mindestens einem Abgaswärmetauscher erzeugt und strömt von dort durch eine Turbine, wo der Dampf expandiert, mechanische Arbeit leistet und die Temperatur des Dampfes abnimmt. Anschließend kondensiert der expandierte Dampf in einem Wärmetauscher und wird von einer Pumpe erneut in den Abgaswärmetauscher zurückgefördert. Diese Pumpe wird mechanisch von der Turbine angetrieben. Zusätzlich ist diese Pumpe mit einer elektrischen Maschine verbunden, die beim Start der Verbrennungskraftmaschine aus deren Batterie gespeist wird. Dies erfolgt so lange, bis sich im System ein ausreichender Dampfdruck gebildet hat, so dass eine Zirkulation innerhalb des geschlossenen Systems erfolgt. Im Betrieb wird die elektrische Maschine zum Beispiel als regelbarer Generator betrieben, über den die Leistungsregelung der Aufladeeinrichtung erfolgt. Liegt in diesem Betriebszustand inklusive im Antriebsstrang mehr Energie vor als erforderlich, speist die elektrische Maschine Leistung in das Bordnetz des Kraftfahrzeuges ein, entlastet damit den Generator, der an der Verbrennungskraftmaschine vorgesehen ist, so dass die im Abgasstrang nicht nutzbare Energie als elektrische Leistung in das Bordnetz des Fahrzeuges eingespeist werden kann. Gegebenenfalls kann bei entsprechender Auslegung der bisher an der Verbrennungskraftmaschine eingesetzte Generator vollständig entfallen.

### Kurze Beschreibung der Zeichnungen

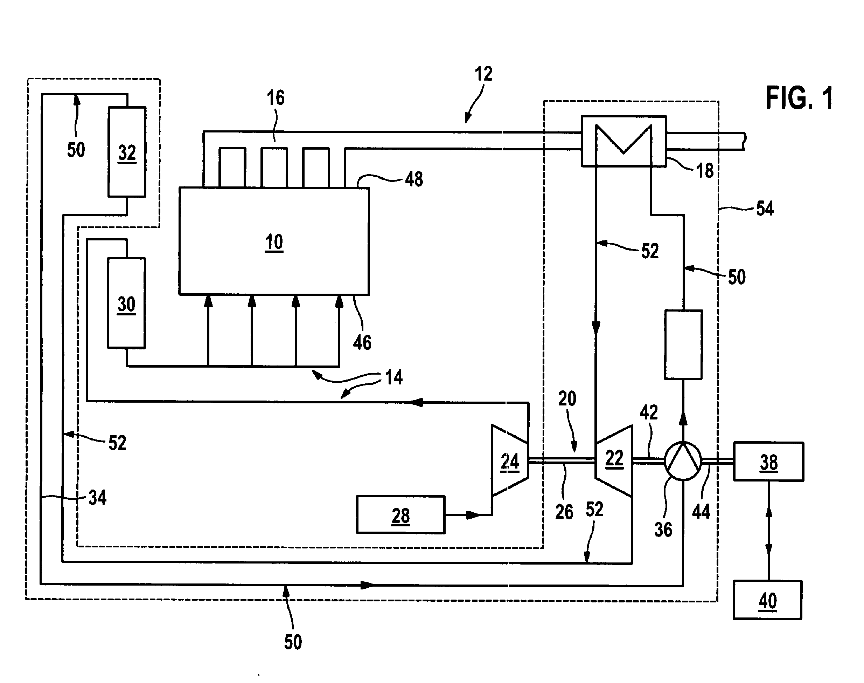

Anhand der Zeichnung wird die Erfindung nachstehend eingehender beschrieben.

Die einzige Figur zeigt eine schematische Darstellung des Schaltbildes für eine Aufladeeinrichtung einer Verbrennungskraftmaschine, die mittels einer Dampfturbine angetrieben ist.

### Ausführungsformen

Der Zeichnung ist eine Verbrennungskraftmaschine 10 zu entnehmen, deren Einlassseite mit Bezugszeichen 46 bezeichnet ist und deren Auslassseite mit Bezugszeichen 48 identifiziert ist. Von der Auslassseite 48 der Verbrennungskraftmaschine 10 aus erstreckt sich ein Abgastrakt 12, in welchem ein Abgassammelrohr 16 angeordnet ist. Über das Abgassammelrohr 16 wird der Abgasmassenstrom der Verbrennungskraftmaschine 10 über mindestens einen Katalysator und mindestens einen Schalldämpfer ins Freie geleitet. Im Abgastrakt 12 der Verbrennungskraftmaschine 10 befindet sich mindestens ein Abgaswärmetauscher 18.

Der mindestens eine Abgaswärmetauscher 18 ist Bestandteil eines mit Bezugszeichen 54 identifizierten Dampfkreislaufes. Die Komponenten des Dampfkreislaufes 54 sind in der Zeichnung durch gestrichelte Linien hervorgehoben und einen Kreislauf bildend markiert. Auf der Einlassseite 46 der in der Zeichnung als Vierzylinder-Verbrennungskraftmaschine dargestellten Verbrennungskraftmaschine 10 befindet sich ein Ansaugtrakt 14, in dem ein Verdichterteil 24 einer Aufladeeinrichtung 20 angeordnet ist. Dem Verdichterteil 24 ist ein Luftfilter 28 vorgeschaltet sowie ein Ladeluftkühler 30 nachgeschaltet. Über den Luftfilter 28 gelangt Frischluft in den Ansaugtrakt 14 der Verbrennungskraftmaschine 10, wird durch den Verdichterteil 24 verdichtet und als vorverdichtete Frischluft dem Ladeluftkühler 30 zugeführt, von wo aus die vorverdichtete, im Ladeluftkühler 30 abgekühlte Luft in die einzelnen Zylinder der aufgeladenen Verbrennungskraftmaschine 10 geleitet wird.

Der gestrichelt hervorgehobene Kreislauf 54 des Arbeitsmediums, wie z. B. Wasser, umfasst neben dem mindestens einen Wärmetauscher 18, der im Abgastrakt 12 angeordnet ist, einen Turbinenteil 22, in dem der im Wärmetauscher 18 erzeugte, überhitzte Dampf entspannt wird. Stromab des Turbinenteiles 22 der Aufladeeinrichtung 20 verläuft eine Leitung innerhalb des Kreislaufes 54 des Arbeitsmediums, wie z. B. Wasser, in dem der Dampf im Aggregatzustand Gasphase 52 einem Zusatzkühler 32 zuströmt. Der Zusatzkühler 32 stellt einen Dampfkondensator dar, welchen das zirkulierende Arbeitsmedium, z. B. Wasser, in Flüssigphase 50 verlässt, um einem Förderaggregat 36 in Gestalt einer Pumpe in Flüssigphase 50 zuzuströmen. Durch die Pumpe 36 erfolgt eine Förderung des Arbeitsmediums, welches im flüssigen Aggregatzustand 50 vorliegt, und eine Einleitung in den mindestens einen Wärmetauscher 18 im Abgastrakt 12 der Verbrennungskraftmaschine. Durch die dem Abgas innewohnende Wärme erfolgt eine Verdampfung des in Flüssigphase 50 in den mindestens einen Abgaswärmetauscher 18 eintretenden Arbeitsmediums und dessen Überführung in die Gasphase 52. Als Dampf verlässt das Arbeitsmedium den mindestens einen Wärmetauscher 18 und strömt dem bereits erwähnten Turbinenteil 22 der Aufladeeinrichtung 20 zu.

Aus der Darstellung gemäß der Zeichnung geht hervor, dass die Aufladeeinrichtung 20 eine Kopplung 26 aufweist, die den mindestens einen Turbinenteil 22 mit dem Verdichterteil 24 mechanisch koppelt, der im Ansaugtrakt 14 der aufgeladenen Verbrennungskraftmaschine 10 angeordnet ist. Anstelle der in der Zeichnung starr dargestellten Kopplung 26 kann auch eine Kopplung mit mittels einer oder mehrerer Kupplungen zwischen dem mindestens einen Turbinenteil 22, in dem der in dem mindestens einen Abgaswärmetauscher 18 erzeugte Dampf entspannt wird, und dem Verdichterteil 24 der Aufladeeinrichtung 20 vorgesehen sein. Darüber hinaus ist der Turbinenteil 22 der Aufladeeinrichtung 20 über eine Antriebswelle 42 mit dem Förderaggregat 36 verbunden, über welches das Arbeitsmedium komprimiert wird und in den mindestens einen Abgaswärmetauscher 18 gepumpt wird.

Darüber hinaus verläuft vom Turbinenteil 22 der Aufladeeinrichtung 20 entweder unmittelbar mit der Turbinenwelle des Turbinenteils 22 gekoppelt oder mittelbar über das Förderaggregat 36 angetrieben eine Antriebswelle 44 zu einer elektrischen Maschine 38. Bei der elektrische Maschine 38 handelt es sich bevorzugt um eine solche, die sowohl im Generatormodus als auch im Motorbetriebsmodus betrieben werden kann.

Die elektrische Maschine 38 wird beim Start der aufgeladenen Verbrennungskraftmaschine 10 über den Energiespeicher 40, zum Beispiel die Fahrzeugbatterie, versorgt, bis sich im Kreislauf 54 des Arbeitsmediums ein ausreichender Dampfdruck aufgebaut hat, so dass die Zirkulation innerhalb des Kreislaufes 54 des Arbeitsmediums in Gang kommt. Die elektrische Maschine 38 wird als regelbarer Generator betrieben, über den eine Förderleistungsregelung der Aufladeeinrichtung 20 realisiert wird. Wird die elektrische Maschine zum Beispiel im Generatormodus betrieben, so wird der Ladedruck an der Aufladeeinrichtung 20 abgesenkt. Wird die elektrische Maschine 38 jedoch im Motormodus betrieben, so kann an der Aufladeeinrichtung 20 eine Ladedruckerhöhung erreicht werden.

Im Betrieb des Kreislaufes 54 des Arbeitsmediums speist die elektrische Maschine 38 elektrische Leistung in das Bordnetz des Kraftfahrzeuges ein und entlastet damit den Generator, der an der Verbrennungskraftmaschine 10 vorgesehen ist. Je nach Auslegung der elektrischen Maschine 38 kann der der Verbrennungskraftmaschine 10 zugeordnete Generator entweder wesentlich kleiner dimensioniert werden oder vollständig entfallen. Mit Hilfe der im Generatormodus betreibbaren elektrischen Maschine 38 kann im Abgasstrang der Verbrennungskraftmaschine 10 nicht genutzte überschüssige Energie in elektrische Leistung umgewandelt und in das Bordnetz des Fahrzeugs eingespeist werden.

Da die elektrische Maschine 38 entweder unter Zwischenschaltung des Förderaggregates 36 über die Antriebswelle 44 oder unmittelbar über eine in der Zeichnung nicht dargestellte Antriebswelle vom Turbinenteil 22 der Aufladeeinrichtung 20 angetrieben ist und der Leistungsregelung der Aufladeeinrichtung 20 dient, kann bei entsprechender Auslegung der elektrischen Maschine 38 der ansonsten an der aufgeladenen Verbrennungskraftmaschine 10 eingesetzte Generator entfallen.

Aus der Darstellung gemäß der Zeichnung geht hervor, dass der Kreislauf 54 des Arbeitsmediums im Wesentlichen den mindestens einen Abgaswärmetauscher 18, den Turbinenteil 22 der Aufladeeinrichtung 20, den Zusatzkühler 32 und das Förderaggregat 36 umfasst. Aus der Darstellung gemäß der Zeichnung geht hervor, dass im Gegensatz zu der aus dem Stand der Technik bekannten Lösung das Turbinenteil 22 der Aufladeeinrichtung 20, welches mit dem von dem mindestens einen Abgaswäumetauscher 18 gelieferten überhitzten Dampf beaufschlagt wird und diesen expandiert, nicht unmittelbar auf die Kurbelwelle der aufgeladenen Verbrennungskraftmaschine 10 wirkt, sondern stattdessen den im Ansaugtrakt der Verbrennungskraftmaschine 14 untergebrachten Verdichterteil 24 der ein- oder mehrstufig ausbildbaren Aufladeeinrichtung 20 antreibt. Daneben wird mechanische Leistung vom Verdichterteil 22 zum Antrieb des Förderaggregates 36 sowie zum Antrieb der elektrischen Maschine 38 im Betriebsmodus Generatorbetrieb abgezweigt. Dies erlaubt eine Reduktion der Gaswechselarbeit der aufgeladenen Verbrennungskraftmaschine 10 durch den Entfall der andernfalls im Abgastrakt 12 vorzusehenden Turbine eines Abgasturboladers, wodurch sich der Abgasgegendruck reduziert, sowie entweder eine kleinere Dimensionierung des Generators, der an der Verbrennungskraftmaschine vorgesehen ist, oder den Verzicht auf diesen.

Anstelle des in der Zeichnung dargestellten einen Abgaswärmetauschers 18 können zur Erhöhung der erzeugten Dampfmenge im Kreislauf 54 des Arbeitsmediums im Abgastrakt 12 der aufgeladenen Verbrennungskraftmaschine 10 ein oder mehrere weitere Abgaswärmetauscher 18 - abhängig vom zur Verfügung stehenden Bauraum - untergebracht werden. Auch kann anstelle des im Kreislauf 54 des Arbeitsmediums vorgesehenen einen Förderaggregates 36 ein weiteres Förderaggregat in Gestalt einer weiteren Pumpe vorgesehen sein. Die in der Zeichnung dargestellte Aufladeeinrichtung 20 umfasst einen Verdichterteil 24 sowie einen mit überhitztem Dampf beaufschlagten Turbinenteil 22, in dem der überhitzte Dampf expandiert wird. Anstelle der in der Zeichnung einstufig dargestellten Aufladeeinrichtung 20 kann dieser auch zwei oder mehrere Fluten enthalten. Des Weiteren ist auch denkbar, die Aufladeeinrichtung 20 als Registeraufladeeinrichtung zu gestalten, bei dem eine Hochdruckstufe eine Niederdruckstufe steuert und umgekehrt.

## Patentansprüche

1. Aufladeeinrichtung (20), insbesondere zur Aufladung einer Verbrennungskraftmaschine (10), in deren Abgastrakt (12) mindestens ein Abgaswärmetauscher (18) eines in einem geschlossenen System zirkulierenden Kreislaufes (54) eines Arbeitsmediums untergebracht ist und dem mindestens einen Wärmetauscher (18) ein Förderaggregat (36) im Kreislauf (54) des Arbeitsmediums vorgeschaltet ist und der Kreislauf (54) des Arbeitsmediums mindestens einen Turbinenteil (22) enthält, der mit dem von dem mindestens einen Abgaswärmetauscher (18) gelieferten überhitzten Arbeitsmedium beaufschlagt wird und dieses expandiert, wobei über den mindestens einen Turbinenteil (22) mindestens ein im Ansaugtrakt (14) der Verbrennungskraftmaschine (10) angeordneter Verdichterteil (24) angetrieben ist, **dadurch gekennzeichnet, dass** der mindestens eine Turbinenteil (22) der Aufladeeinrichtung (20) über eine Kopplung (42, 44) mittelbar oder unmittelbar mit mindestens einer elektrischen Maschine (38) gekoppelt ist, die zumindest im Generatormodus betreibbar ist, und der Ladedruck im Ansaugtrakt (14) der Verbrennungskraftmaschine (10) durch die Ansteuerung der elektrischen Maschine (38) regelbar ist und dass der mindestens eine Verdichterteil (24) dann, wenn die elektrische Maschine (38) im Generatormodus betrieben wird, ausschließlich vom mindestens einen Turbinenteil (22) angetrieben ist.

2. Aufladeeinrichtung (20) gemäß Anspruch 1, **dadurch gekennzeichnet, dass** der mindestens eine Turbinenteil (22) der Aufladeeinrichtung (20) mit dem mindestens einen Verdichterteil (24) über eine Kopplung (26) gekoppelt ist.

3. Aufladeeinrichtung (20) gemäß Anspruch 1, **dadurch gekennzeichnet, dass** der mindestens eine Turbinenteil (22) der Aufladeeinrichtung (20) mit mindestens einem Förderaggregat (36), insbesondere einer Pumpe, gekoppelt ist.

4. Aufladeeinrichtung (20) gemäß Anspruch 1, **dadurch gekennzeichnet, dass** der Kreislauf (54) des Arbeitsmediums stromab des mindestens einen Turbinenteiles (22) mindestens einen Zusatzkühler (32) zur Dampfkondensation enthält.

5. Aufladeeinrichtung (20) gemäß einem oder mehrerer der vorhergehenden Ansprüche, **dadurch gekennzeichnet, dass** der mindestens eine Turbinenteil (22) des Kreislaufes (54) des Arbeitsmediums mit dem Verdichterteil (24) im Ansaugtrakt (14) der Verbrennungskraftmaschine (10) über eine eine Kupplung enthaltende Kopplung (26) gekoppelt ist.

6. Aufladeeinrichtung (20) gemäß einem oder mehrerer der vorhergehenden Ansprüche, **dadurch gekennzeichnet, dass** nach Aufbau der Zirkulation des Dampfes im Kreislauf (54) des Arbeitsmediums das Bordnetz des Fahrzeugs über die mit dem mindestens einen Turbinenteil (22) der Aufladeeinrichtung (20) mittelbar oder unmittelbar gekoppelte elektrische Maschine (38) versorgt wird.

7. Aufladeeinrichtung (20) gemäß Anspruch 1, **dadurch gekennzeichnet, dass** im Ansaugtrakt (14) der Verbrennungskraftmaschine (10) dem Verdichterteil (24) der Aufladeeinrichtung (20) nachgeschaltet, mindestens ein Wärmetauscher (30) als Ladeluftkühler angeordnet ist.

8. Aufladeeinrichtung (20) gemäß Anspruch 1, **dadurch gekennzeichnet, dass** der Ladedruck bei Betrieb der elektrischen Maschine (38) im Generatormodus abgesenkt oder der Ladedruck bei Betrieb der elektrischen Maschine im Motormodus erhöht wird.

## Claims

1. Supercharging device (20), in particular for supercharging an internal combustion engine (10), in the exhaust-gas section (12) of which at least one exhaust-gas heat exchanger (18) of a circuit (54) of a working medium circulating in a closed system is accommodated, and a delivery assembly (36) being connected of the at least one heat exchanger (18) in the circuit (54) of the working medium, and the circuit (54) of the working medium containing at least one turbine part (22) which is loaded with the superheated working medium, which is supplied by the at least one exhaust-gas heat exchanger (18), and expands the said working medium, at least one compressor part (24) which is arranged in the intake section (14) of the internal combustion engine (10) being driven via the at least one turbine part (22), **characterized in that** the at least one turbine part (22) of the supercharging device (20) is coupled via a coupling (42, 44) indirectly or directly to at least one electric machine (38) which can be operated at least in generator mode, and the boost pressure in the intake section (14) of the internal combustion engine (10) can be regulated by the actuation of the electric machine (38), and **in that** the at least one compressor part (24) is driven exclusively by the at least one turbine part (22) when the electric machine (38) is operated in generator mode.

2. Supercharging device (20) according to Claim. 1, **characterized in that** the at least one turbine part (22) of the supercharging device (20) is coupled to the at least one compressor part (24) via a coupling (26).

3. Supercharging device (20) according to Claim 1, **characterized in that** the at least one turbine part (22) of the supercharging device (20) is coupled to at least one delivery assembly (36), in particular a pump.

4. Supercharging device (20) according to Claim 1, **characterized in that** the circuit (54) of the working medium contains at least one additional cooler (32) for steam condensation downstream of the at least one turbine part (22).

5. Supercharging device (20) according to one or more of the preceding claims, **characterized in that** the at least one turbine part (22) of the circuit (54) of the working medium is coupled to the compressor part (24) in the intake section (14) of the internal combustion engine (10) via a coupling (26) which contains a clutch.

6. Supercharging device (20) according to one or more of the preceding claims, **characterized in that**, after the circulation of the steam is built up in the circuit (54) of the working medium, the on-board electrical system of the vehicle is supplied via the electric machine (38) which is coupled indirectly or directly to the at least one turbine part (22) of the supercharging device (20).

7. Supercharging device (20) according to Claim 1, **characterized in that**, connected behind the compressor part (24) of the supercharging device (20) in the intake section (14) of the internal combustion engine (10), at least one heat exchanger (30) is arranged as a charge-air cooler.

8. Supercharging device (20) according to Claim 1, **characterized in that** the boost pressure is lowered during operation of the electric machine (38) in generator mode, or the boost pressure is increased during operation of the electric machine in motor mode.

## Revendications

1. Dispositif de suralimentation (20), en particulier pour suralimenter un moteur à combustion interne (10), dans le système d'échappement (12) duquel est monté au moins un échangeur de chaleur à gaz d'échappement (18) d'un circuit (54) de fluide de travail circulant dans un système fermé, et un groupe de refoulement (36) est monté en amont de l'au moins un échangeur de chaleur (18) dans le circuit (54) du fluide de travail, et le circuit (54) du fluide de travail contient au moins une partie de turbine (22) qui est sollicitée avec le fluide de travail surchauffé fourni par l'au moins un échangeur de chaleur à gaz d'échappement (18) et le détend, au moins une partie de compresseur (24) disposée dans le système d'admission (14) du moteur à combustion interne (10) étant entraînée par le biais de l'au moins une partie de turbine (22), **caractérisé en ce que** l'au moins une partie de turbine (22) du dispositif de suralimentation (20) est accouplée par le biais d'un couplage (42, 44) de manière indirecte ou directe à au moins une machine électrique (38), qui peut fonctionner au moins en mode de générateur, et la pression de suralimentation dans le système d'admission (14) du moteur à combustion interne (10) peut être régulée par la commande de la machine électrique (38) et **en ce que** l'au moins une partie de compresseur (24) est exclusivement entraînée par au moins une partie de turbine (22) lorsque la machine électrique (38) fonctionne en mode de générateur.

2. Dispositif de suralimentation (20) selon la revendication 1, **caractérisé en ce que** l'au moins une partie de turbine (22) du dispositif de suralimentation (20) est accouplée à l'au moins une partie de compresseur (24) par le biais d'un couplage (26).

3. Dispositif de suralimentation (20) selon la revendication 1, **caractérisé en ce que** l'au moins une partie de turbine (22) du dispositif de suralimentation (20) est accouplée à au moins une unité de refoulement (36), en particulier une pompe.

4. Dispositif de suralimentation (20) selon la revendication 1, **caractérisé en ce que** le circuit (54) du fluide de travail en aval de l'au moins une partie de turbine (22) contient au moins un refroidisseur supplémentaire (32) pour la condensation de la vapeur.

5. Dispositif de suralimentation (20) selon l'une quelconque ou plusieurs des revendications précédentes, **caractérisé en ce que** l'au moins une partie de turbine (22) du circuit (54) du fluide de travail est accouplée à la partie de compresseur (24) dans le système d'admission (14) du moteur à combustion interne (10) par le biais d'un couplage (26) contenant un accouplement.

6. Dispositif de suralimentation (20) selon l'une quelconque ou plusieurs des revendications précédentes, **caractérisé en ce qu'**après l'augmentation de la circulation de la vapeur dans le circuit (24) du fluide de travail, le réseau de bord du véhicule est alimenté par le biais de la machine électrique (38) accouplée indirectement ou directement à l'au moins une partie de turbine (22) du dispositif de suralimentation (20).

7. Dispositif de suralimentation (20) selon la revendication 1, **caractérisé en ce qu'**au moins un échangeur de chaleur (30) en tant que refroidisseur d'air de suralimentation est disposé dans le système d'admission (14) du moteur à combustion interne (10) en aval de la partie de compresseur (24) du dispositif de suralimentation (20).

8. Dispositif de suralimentation (20) selon la revendication 1, **caractérisé en ce que** la pression de suralimentation, lors du fonctionnement de la machine électrique (38) en mode de générateur, est diminuée, ou, lors du fonctionnement de la machine électrique en mode de moteur, est augmentée.
